Europäisches Patentamt

European Patent Office

Office européen des brevets

(11) Veröffentlichungsnummer : **0 149 808**
**B1**

(12) # EUROPÄISCHE PATENTSCHRIFT

(45) Veröffentlichungstag der Patentschrift :
27.05.87

(21) Anmeldenummer : **84115647.4**

(22) Anmeldetag : **17.12.84**

(51) Int. Cl.⁴ : **F 16 H 57/02**, F 16 H  9/06,
B 23 Q 37/00, B 23 B 47/16

(54) **Stufengetriebevorsatz für Vielzweckelektromotoren.**

(30) Priorität : **27.12.83 DE 3347137**

(43) Veröffentlichungstag der Anmeldung :
**31.07.85 Patentblatt 85/31**

(45) Bekanntmachung des Hinweises auf die Patenterteilung : **27.05.87 Patentblatt 87/22**

(84) Benannte Vertragsstaaten :
**AT FR GB SE**

(56) Entgegenhaltungen :
**DE-C-  894 665
DE-U- 1 992 355
DE-U- 7 314 452
GB-A-  832 749
US-A- 2 296 573**

(73) Patentinhaber : **Hanning Elektro-Werke GmbH & Co.
Holter Strasse 90
D-4811 Oerlinghausen (DE)**

(72) Erfinder : **Ueberschär, Reinhard
Vahlkamp 12
D-4800 Bielefeld 17 (DE)**

(74) Vertreter : **Hentzschel, Hans-Jürgen
in der Feldmark 3
D-4970 Bad Oeynhausen 1 (DE)**

## Beschreibung

Die Erfindung betrifft einen Stufengetriebevorsatz für Vielzweckelektromotoren, dessen auf einem zum Anklemmen von Zusatzgeräten bestimmten, die Motorwelle umgebenden Spannhals befestigbares kastenartiges Getriebegehäuse zwei parallelachsig angeordnete Riemen- oder Zahnscheiben aufnimmt, von denen die eine Riemenscheibe der im Betriebszustand in das Getriebegehäuse eingreifenden Motorwelle und die zweite Riemenscheibe einer von der gegenüberliegenden Seite her in das Getriebegehäuse eingesetzten Bohrspindel aufgeschraubt ist.

Bekannte Vorrichtungen dieser Art sind ähnlich dem im DE-GM 19 92 355 gezeigten Antriebsblock mit erheblichem Aufwand gefertigt, was einen unnötig hohen Endpreis ergibt. Dieser Umstand ist besonders deshalb von wesentlichem Nachteil, weil es sich bei den Käufern solcher Geräte vorwiegend um Heimwerker handelt, die auf möglichst preiswertes Werkzeug angewiesen sind. Außerdem können die bisherigen Konstruktionen wegen ihres verhältnismäßig schwierigen Zusammenbaus kaum als Bausatz angeboten werden.

Hinsichtlich des vorgenannten Standes der Technik ist es die Aufgabe der Erfindung, einen Stufengetriebevorsatz für Vielzweckelektromotoren zu schaffen, der nur geringe Herstellungskosten verursacht und sich mit wenig Montageaufwand aus gleichförmigen Teilen zusammensetzen läßt. Gleichzeitig wird darüber hinaus auch eine einfach durchzuführende Regulierung der Riemenspannung angestrebt.

Die erfindungsgemäße Lösung der gestellten Aufgabe geht aus den Ansprüchen hervor.

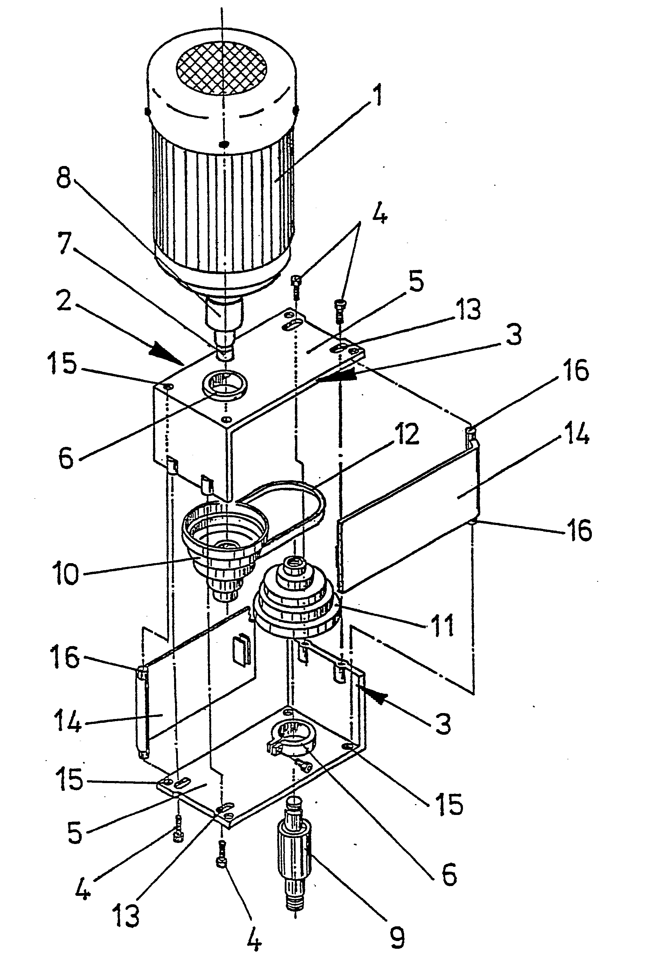

Ein Ausführungsbeispiel der Erfindung ist in der Zeichnung als Explosionsdarstellung wiedergegeben.

Der abgebildete, für einen Vielzweckelektromotor 1 bestimmte Stufengetriebevorsatz weist ein kastenartiges Getriebegehäuse 2 auf, das hauptsächlich aus zwei übereinstimmend gestalteten Winkelteilen 3 besteht, die von Gewindeschrauben 4 zusammengehalten werden. Ein Schenkel 5 dieser Winkelteile 3 ist jeweils an einem Schenkelende mit einem Spannfutter 6 versehen, mit dessen Hilfe das Getriebegehäuse 2 im zusammengebauten Zustand einerseits auf dem die Motorwelle 7 des Elektromotors 1 umgebenden Spannhals 8 befestigt und andererseits mit einer parallelachsig zur Motorwelle 7 in das Getriebegehäuse 2 einzusetzenden Bohrspindel 9 verbunden ist.

Der in das Getriebegehäuse 2 eingreifenden Motorwelle 7 wird eine Riemenscheibe 10 aufgeschraubt, der eine mit der Bohrspindel 9 zu verschraubende ebensolche zweite Riemenscheibe 11 gegenübersteht. Beide Riemenscheiben 10 und 11 sind mit mehreren Über- bzw. Untersetzungsstufen ausgestattet, denen der Treibriemen 12 jeweils so aufgelegt wird, daß sich an der Bohrspindel 9 die jeweils gewünschte Drehzahl ergibt.

Um ein einfaches Regulieren der Treibriemenspannung zu ermöglichen, sollen die Winkelteile 3 des Getriebegehäuses 2 in der Längsrichtung der Schenkel 5 gegeneinander verschiebbar sein. Hierzu sind in den Winkelteilen 3 die Gewindeschrauben 4 aufnehmende Langlöcher 13 angeordnet, die bei leicht gelösten Gewindeschrauben 4 die gewünschten Längsverschiebungen des Getriebegehäuses 2 gestatten.

Zum seitlichen Verschließen des von den beiden Winkelteilen 3 gebildeten Getriebegehäuses 2 dienen Wandplatten 14, die in Aussparungen 15 der Winkelteile 3 zu lagernde Scharnierzapfen 16 besitzen. Auch diese klappenartigen Wandplatten 14 sind wie die Winkelteile 3 und die Riemenscheiben 10 und 11 formgleich gestaltet, damit sich möglichst wenige verschiedene Bauteile ergeben, was die von der Erfindung angestrebten niedrigen Herstellungskosten bewirkt.

In Abwandlung des zur Beschreibung gelangten Stufengetriebevorsatzes könnten beispielsweise anstelle der Riemenscheiben 10 und 11 auch Zahnscheiben Verwendung finden. Ebenso läge es im Rahmen der Erfindung, wenn die Winkelteile 3 bzw. die an ihnen befestigten Wandplatten 14 noch über zusätzliche Bohrungen oder Profilierungen für gegebenenfalls daran zu montierende Anbauteile verfügen würden.

## Patentansprüche

1. Stufengetriebevorsatz für Vielzweckelektromotoren, dessen auf einem zum Anklemmen von Zusatzgeräten bestimmten, die Motorwelle (7) umgebenden Spannhals (8) befestigbares kastenartiges Getriebegehäuse (2) zwei parallelachsig angeordnete Riemen- oder Zahnscheiben (10, 11) aufnimmt, von denen die eine Riemenscheibe (10) der im Betriebszustand in das Getriebegehäuse (2) eingreifenden Motorwelle (7) und die zweite Riemenscheibe (11) einer von der gegenüberliegenden Seite her in das Getriebegehäuse (2) eingesetzten Bohrspindel (9) aufgeschraubt ist, dadurch gekennzeichnet, daß sich das Getriebegehäuse (2) aus zwei übereinstimmend gestalteten Winkelteilen (3) zusammensetzt, deren einer Schenkel (5) jeweils an einem Schenkelende ein Spannfutter (6) für den Spannhals (8) des Elektromotors (1) bzw. die Bohrspindel (9) aufweist, und die mit lösbaren Befestigungsmitteln (4, 13) in der Längsrichtung dieser Schenkel (5) gegeneinander verschiebbar zusammengehalten sind.

2. Stufengetriebevorsatz nach Anspruch 1, dadurch gekennzeichnet, daß es sich bei den die beiden Winkelteile (3) des Getriebegehäuses (2) gegeneinander verschiebbar zusammenhaltenden Befestigungsmitteln (4, 13) um Gewindeschrauben (4) und sich in der Verschieberichtung in den Winkelteilen (3) erstreckende Langlöcher (13) handelt.

3. Stufengetriebevorsatz nach Anspruch 1 oder 2, dadurch gekennzeichnet, daß die Winkelteile (3) mit Aussparungen (15) zur Anbringung von das Getriebegehäuse (2) seitlich verschließenden Wandplatten (14) ausgestattet sind.

4. Stufengetriebevorsatz nach Anspruch 3, dadurch gekennzeichnet, daß die das Getriebegehäuse (2) seitlich verschließenden Wandplatten (14) klappenförmig ausgebildet sind und in den Aussparungen (15) der Winkelteile (3) zu lagernde Scharnierzapfen (16) besitzen.

5. Stufengetriebevorsatz nach einem der Ansprüche 1 bis 4, dadurch gekennzeichnet, daß die Winkelteile (3) des Getriebegehäuses (2) und/oder die an ihnen befestigten Wandplatten (14) über Bohrungen oder Profilierungen für gegebenenfalls daran zu montierende Anbauteile verfügen.

6. Stufengetriebevorsatz nach einem der vorhergehenden Ansprüche, dadurch gekennzeichnet, daß außer den das Getriebegehäuse (2) bildenden Winkelteilen (3) auch die beiden Riemenscheiben (10, 11) und die das Getriebegehäuse (2) seitlich verschließenden Wandplatten (14) jeweils übereinstimmend gestaltet sind.

## Claims

1. Multispeed transmission attachment for multipurpose electric motors, with its casing-like gear box (2), which can be attached to a collar (8) that surrounds the shaft (7) of the motor (1) and is intended for securing accessories, accommodating two axially parallel belt wheels or toothed wheels (10, 11), of which one is screwed onto the motor shaft (7), which engages inside the gear box (2) when the motor (1) is in operation, and the other onto a drill spindle (9) that is inserted into the gear box (2) from the opposite side, characterized in that the gear box (2) consists of two similarly shaped angled components (3), each flank (5) of which has at the end a chuck (6) for the collar (8) of the electric motor (1) or for the drill spindle (9) and which are secured together with means of attachment (4, 13) that can be loosened in such a way that the components can move toward each other along said flank (5).

2. Multispeed transmission attachment as in Claim 1, characterized in that the means of attachment (4, 13) that secure the two angled components (3) of the gear box (2) together in such a way that they can move are screws (4) and slots (13) that extend along the components in the direction the components move in.

3. Multispeed transmission attachment as in Claim 1 or 2, characterized in that the angled components (3) have recesses (15) that the accommodate wall plates (14) that cover the sides of the gear box (2).

4. Multispeed transmission attachment as in Claim 3, characterized in that the wall plates (14) that cover the sides of the gear box (2) are in the form of flaps and have hinge pins (16) that are to be mounted in the recesses (15) in the angled components (3).

5. Multispeed transmission attachment as in one of Claims 1 through 3, characterized in that the angled components (3) of the gear box (2) or the wall plates (14) attached to them have bores or contours available to them so that they can accept other accessories as well.

6. Multispeed transmission attachment as in one of the foregoing Claims, characterized in that not only the angled components (3) that constitute the gear box (2) but also the two belt wheels (10, 11) and the wall plates (14) that cover the sides of the gear box (2) are similar to each other in shape.

## Revendications

1. Module de boîte de vitesse pour moteurs électriques polyvalents dont le boîtier (2) en forme de caisson, pouvant être fixé sur un mandrin de montage d'appareils auxiliaires, lequel entoure l'arbre (7) du moteur, enferme deux poulies ou disques dentés (10, 11) d'axes parallèles parmi lesquels une poulie (10) est accouplée dans l'état de fonctionnement, à l'arbre (7) du moteur pénétrant dans le boîtier (2) de la boîte de vitesse tandis que l'autre poulie (11) est accouplée à une broche insérée dans le boîtier (2) de la boîte de vitesse, à partir du côté opposé, caractérisé en ce que le boîtier (2) de la boîte de vitesse est formé par l'assemblage de deux éléments (3) en forme de cornière 0 s'adaptant l'un sur l'autre, éléments dont une aile (5) présente à une extrémité de cette aile, un collier (6) pour le mandrin (8) du moteur (1) ou pour la broche (9), et en ce que ces éléments en forme de cornière sont maintenus assemblés, en pouvant être décalés l'un par rapport à l'autre dans la direction longitudinale de cette aile (5), par des moyens de fixation amovibles (4, 13).

2. Module de boîte de vitesse suivant la revendication 1 caractérisé en ce que les moyens de fixation maintenant assemblés les deux éléments (3) en forme de cornière du boîtier de la boîte de vitesse, tout en permettant un décalage relatif de ces éléments, sont constitués par des vis (4) et des lumières allongées (13) s'étendant, dans la direction du décalage, dans les éléments (3) en forme de cornière.

3. Module de boîte de vitesse suivant l'une quelconque des revendications 1 ou 2 caractérisé en ce que les éléments (3) en forme de cornière sont pourvus d'évidements (15) pour la mise en place de plaques de paroi (14) assurant la fermeture latérale du boîtier (2) de la boîte de vitesse.

4. Module de boîte de vitesse suivant la revendication 3 caractérisé en ce que les plaques de paroi (14) assurant la fermeture latérale du boîtier (2) de la boîte de vitesse sont réalisées sous la forme de volets et comportent des axes de charnière (16) destinés à venir se loger dans les évidements (15) des éléments (3) en forme de cornière.

5. Module de boîte de vitesse suivant l'une quelconque des revendications 1 à 4 caractérisé en ce que les éléments (3) en forme de cornière du boîtier (2) de la boîte de vitesse et/ou les plaques de paroi qui leur sont fixées, comportent des perçages ou des profilés pour le montage éventuel d'éléments additionnels.

6. Module de boîte de vitesse suivant l'une quelconque des revendications précédentes caractérisé en ce qu'en dehors des éléments (3) en forme de cornière formant le boîtier (2) de la boîte de vitesse, les deux poulies (10, 11) et les plaques de paroi (14) assurant la fermeture latérale du boîtier (2) de la boîte de vitesse sont conformées également de manière à s'adapter les unes aux autres.

0 149 808